Europäisches Patentamt

European Patent Office

Office européen des brevets

(11) Publication number: **0 319 112 B1**

# EUROPEAN PATENT SPECIFICATION

(45) Date of publication of patent specification: **28.10.92**  (51) Int. Cl.⁵: **A21C 7/02**

(21) Application number: **88202746.9**

(22) Date of filing: **30.11.88**

(54) **Dough rounding machine.**

(30) Priority: **30.11.87 NL 8702866**

(43) Date of publication of application:
**07.06.89 Bulletin 89/23**

(45) Publication of the grant of the patent:
**28.10.92 Bulletin 92/44**

(84) Designated Contracting States:
**AT BE CH DE ES FR GB GR IT LI LU NL SE**

(56) References cited:
**CH-A- 135 729**          **DE-C- 482 555**
**FR-A- 725 390**          **FR-A- 1 197 480**
**GB-A- 156 602**          **US-A- 1 845 097**

(73) Proprietor: **WERNER & PFLEIDERER-HATON B.V.**
**Industrieterrein 13**
**NL-5981 NK Panningen(NL)**

(72) Inventor: **Steeghs, Mathijs**
**Dr. Ariensstraat 11**
**Panningen(NL)**
Inventor: **Voermans, Augustinus Henricus Adrianus**
**Steenstraat 40**
**Panningen(NL)**

(74) Representative: **Lips, Hendrik Jan George, Ir. et al**
**HAAGSCH OCTROOIBUREAU Breitnerlaan 146**
**NL-2596 HG Den Haag(NL)**

## Description

The invention relates to a dough rounding machine in accordance with the preamble of the single claim.

Such a machine is known from FR-A-725,390. In case of this known machine the surface of the trough is in the shape of a wire screen, parallel wires of which are running oblique to the travelling direction of the dough. The wires of the wire screen might damage the skin of the dough when a mass of dough is taken along by said wire screen.

The object of the invention is to improve the rounding effect of the known machine while preventing damage of the skin of the dough.

This object is attained by applying the features according to the characterizing portion of the claim.

The invention will now be further elucidated with reference to examples shown in the drawing, in which:

Fig. 1 schematically shows a perspective view of a dough rounding machine with in it a cross-section over the rounding trough, and

Figs. 2 to 6 show perspective views and cross-sections of a number of possible ebodiments of the rounding trough according to the invention.

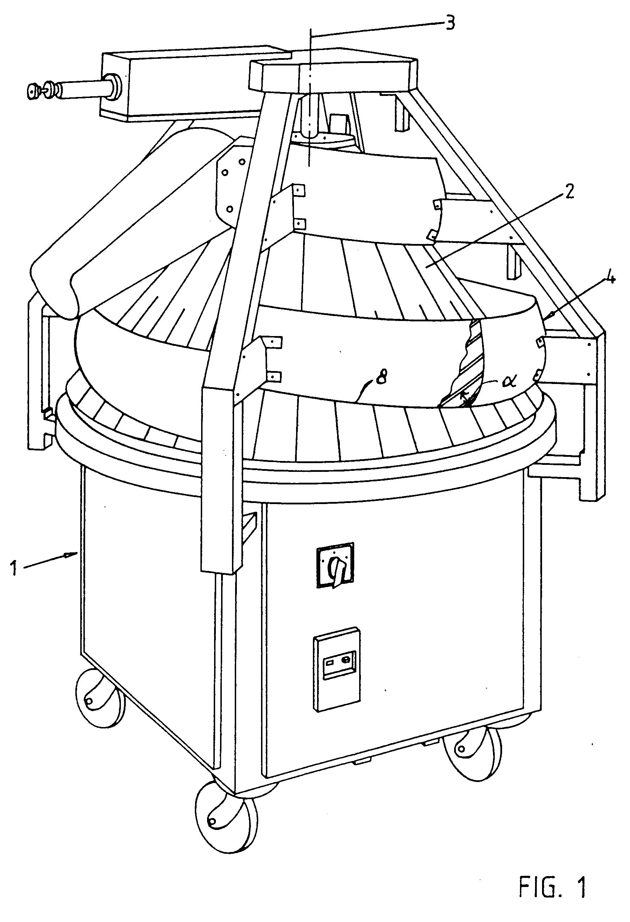

Fig. 1 shows a possible embodiment of a rounding machine 1, use being made of a conical rounding body 2, rotatable around its vertical centre line 3 and cooperating with the rounding trough 4.

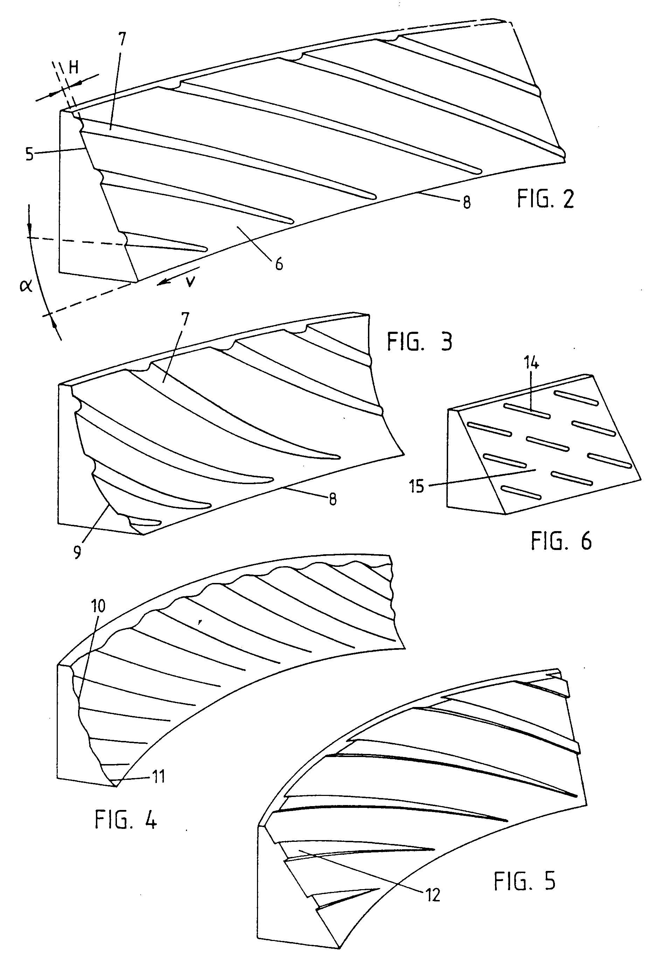

Various embodiments of the rounding trough 4 are shown in Figs. 2 to 6.

In the embodiment according to Fig. 2 the sectional line 5, located substantially in a plane passing through the centre line 3, is straight and the surface 6 of the trough is provided with ribs 7, having a convex cross-section and being substantially semi-circular. The height H of the ribs diminishes gradually towards the edge 8 of the trough present near the rounding body 2 so that the ribs pass ultimately into the surface 6 of the rounding trough.

The angle α between the ribs 7 and that part of the edge 8 of the trough 4 running in downward direction V is smaller than 45° so that a mass of dough moving upward along the trough 4 is brought into the sharp angle present between a rib and the edge 8 of the trough 4.

Fig. 3 shows an embodiment which corresponds to a large extent with that of Fig. 2 but in which the trough, viewed in cross-section, has a more curved shape, that means, extends according to the curved line 9.

In the embodiment according to Fig. 4 the ribs 10 are formed by the tops of the waving line 11.

Fig. 5 shows an embodiment in which the ribs 12 do have a somewhat convex shape but are flattened at the top.

Finally Fig. 6 still shows the possibility that interruptions 15 are made between in line lying ribs 14.

It will be obvious that only some possible embodiments of a rounding trough according to the present invention are shown and that many modifications can be made without departing from the scope of the claim. Thus the various possibilities shown in Figs. 2 to 6 may be combined mutually.

## Claims

1. A dough rounding machine comprising a movable rounding body (2) in the shape of a cone rotatable around the vertically positioned centre line, or in the shape of an endless belt the driving and slave drums of which are positioned vertically, and a rounding trough (4) cooperating with the rounding body extending substantially helicoidally around the rounding body (2), characterized in that the rounding trough (4) is provided with ribs (7,10,12) on the surface facing the rounding body (2), said ribs making an angle (α) smaller than 45° with the lower edge of the trough (8) in such a way that, seen in the direction of travel of the dough, the ribs extend from the upper towards the lower edge of the trough and that the height (H) of the ribs (7,10,12) diminishes gradually from the upper towards the lower edge of the trough and that the ribs (7,10,12) pass into the surface (6) of the trough (4).

## Patentansprüche

1. Wirkmaschine zur Rundung von Teig umfassend einen beweglichen Rundungskörper (2) in der Form eines Kegels, der um die vertikal angordnete Herzlinie drehbar ist, oder in der Form eines endlosen Bandes, dessen Antriebs- und Kehrtrommeln vertikal angeordnet sind, und eine mit dem Rundungskörper zusammenwirkende, sich im wesentlichen spriralförmig um den Rundungskörper (2) herum erstreckende Rundungsrinne (4), **dadurch gekennzeichnet,** dass die Rundungsrinne (4) auf der dem Rundungskörper (2) zugewandten Oberfläche mit Rippen (7,10,12) versehen ist, die einen Winkel (α) kleiner als 45° mit dem unteren Rand der Rinne (8) derart bilden dass, in der Bewegungsrichtung der Rinne gesehen, die Rippen sich von dem oberen zum unteren Rand der Rinne hin erstrecken und dass sich die Höhe (H) der Rippen (7,10,12) allmählich von dem oberen zum unteren Rand der Rinne hin verringert und dass die Rippen (7,10,12) in die Oberfläche (6) der Rinne (4) übergehen.

**Revendications**

1. Machine à bouler la pâte comprenant un corps à bouler (2) mobile en forme d'un cône tournant autour de l'axe vertical, ou en forme d'une bande sans fin, dont les tambours d'entraînement et d'inversion sont disposés verticalement, et une gouttière à bouler (4) coopérant avec le corps à bouler et s'étendant essentiellement en spirale autour du corps à bouler (2), **caractérisée** par le fait que la gouttière à bouler (4) est munie de nervures (7,10,12) sur la surface dirigée vers le corps à bouler (2), lesdites nervures formant un angle ($\alpha$) inférieur à 45° avec le bord inférieur de la gouttière (8) de façon que, vu dans la direction de mouvement de la gouttière, les nervures s'étendent du bord supérieur vers le bord inférieur de la gouttière et que la hauteur (H) des nervures (7,10,12) diminue graduellement du bord supérieur vers le bord inférieur de la gouttière et que les nervures (7,10,12) passent en la surface (6) de la gouttière (4).

FIG. 1

FIG. 2

FIG. 3

FIG. 6

FIG. 4

FIG. 5

5